# FASCICULE DE BREVET EUROPEEN

(11) **EP 1 317 365 B1**
(45) Date de publication et mention de la délivrance du brevet: **02.01.2008**
(21) Numéro de dépôt: 01967424.1
(22) Date de dépôt: 03.09.2001
(51) Int. Cl.: B60T 13/52, B60T 13/44

(54) **SERVOFREIN AVEC JOINT D'ETANCHEITE**
BREMSKRAFTVERSTÄRKER MIT DICHTUNGSANORDNUNG
BRAKE BOOSTER WITH SEAL JOINT

(30) Priorité: 07.09.2000 FR 0011498
(43) Date de publication de la demande: 11.06.2003
(73) Titulaire: ROBERT BOSCH GMBH, 70469 Stuttgart (DE)
(72) Inventeur: GENDRIN, Stéphane, F-35170 Bruz (FR); SACRISTAN, Fernando, E-08003 Barcelona (ES); FOURCADE, Jean, F-93260 Les Lilas (FR); DIVOUX, Cyrill, F-77184 Emerainville (FR)
(86) Numéro de dépôt international: PCT/FR2001/002733
(87) Numéro de publication internationale: WO 2002/020322

(56) Documents cités:
- FR-A- 1 553 165
- US-A- 3 237 526
- US-A- 4 681 196

## Description

La présente invention a pour objet un servofrein pneumatique. L'invention a pour but de simplifier la fabrication de tels servofreins afin de limiter leurs coûts et surtout de rendre leur constitution plus fiable. Le domaine d'application de l'invention est plus généralement celui des joints d'étanchéité jouant le rôle d'interface entre deux volumes. Le but de l'invention est de permettre le passage, au travers d'un orifice occupé par le joint entre deux chambres d'un servofrein, de pièces à section variable, comme par exemple un conduit coudé de manière angulaire.

Un servofrein pneumatique comporte dans son principe une chambre avant à volume variable séparée d'une chambre arrière également à volume variable par une cloison formée par une membrane étanche et souple et par une plaque-jupe rigide. La jupe rigide entraîne un piston pneumatique prenant appui, par l'intermédiaire d'une tige de poussée, sur un piston primaire d'un maître cylindre d'un circuit hydraulique de freinage, typiquement un maître cylindre tandem. La chambre avant, placée du côté du maître cylindre, est reliée pneumatiquement à une source de vide. La chambre arrière, opposée à la chambre avant et placée du côté d'une pédale de frein, est reliée pneumatiquement, de manière contrôlée par une valve, à une source de fluide propulseur, typiquement de l'air sous pression atmosphérique. Au repos, c'est à dire lorsqu'un conducteur n'appuie pas sur la pédale de frein, les chambres avant et arrière sont connectées entre elles alors que la chambre arrière est isolée par rapport à la pression atmosphérique. Lors du freinage, on isole tout d'abord la chambre avant par rapport à la chambre arrière, puis on admet de l'air dans la chambre arrière. Cette admission d'air a pour effet de propulser la cloison et de mettre en oeuvre l'assistance de freinage pneumatique.

Il est par ailleurs connu des assistances de freinage hydraulique. Typiquement un moteur électrique est relié à une pompe hydraulique qui injecte un fluide sous pression dans les circuits de freinage au moment où ceux-ci sont sollicités. Le contrôle de ce moteur électrique est réalisé par une mesure des pressions régnant dans les chambres avant et arrière du servofrein pneumatique. On utilise donc deux détecteurs de pression, raccordés pneumatiquement à chacune de ces chambres, pour en mesurer la pression. Ces détecteurs fournissent des signaux électriques représentatifs de ces pressions. Pour des raisons de commodité, on a choisi de placer les détecteurs de pression sur une paroi extérieure de la chambre avant, à proximité du maître cylindre. Pour mesurer la pression de la chambre avant, il suffit de ménager un trou dans la chambre avant et de placer un détecteur de pression en regard de ce trou.

Pour mesurer la pression dans la chambre arrière, on a alors choisi de percer la cloison entre les chambres, et de placer dans l'orifice ainsi aménagé un conduit étanche, cheminant à l'intérieur de la chambre avant et débouchant dans un deuxième trou de celle-ci. Un deuxième détecteur de pression est placé au regard de ce deuxième trou. Le conduit est souple et permet par ailleurs le déplacement de la cloison à l'intérieur des deux chambres. Compte tenu que la cloison peut occuper des positions avancées et reculées avec une forte amplitude dans la chambre avant, on prévoit de réaliser le conduit sous la forme d'un déploiement hélicoïdal. Le pas de l'hélice ainsi constitué se réduit ou s'agrandit selon la position avancée ou reculée de la cloison dans les deux chambres. Le joint de l'invention est plus particulièrement celui qui permet au conduit souple de prélever la pression dans la chambre arrière, sans occasionner de perte d'étanchéité entre les deux chambres. Le document FR 1553165 decrit un joint étanche conventionel.

Un tel joint, enfoncé dans la cloison, définit un orifice de passage pour une pièce. Il est connu de faire passer une pièce uniforme au travers d'un tel orifice. Cette mise en place est facile avec un joint en caoutchouc de dureté classique. La dureté du caoutchouc est en pratique de l'ordre de 50 shore A sur l'échelle de dureté des caoutchoucs (avec A signifiant température ambiante). Compte tenu du cheminement hélicoïdal du conduit, à l'endroit de la cloison, le prélèvement est réalisé par une pipe coudée. Il faut donc faire passer une telle pipe dans le joint. Il est possible de faire passer une pièce non uniforme, en particulier coudée de manière angulaire, dans de tels joints. Mais dans ce cas le passage du coude impose que le caoutchouc soit mou. Toutefois, avec un caoutchouc mou, l'étanchéité est de mauvaise qualité. Il est aussi possible d'utiliser un caoutchouc mou tout en ayant une bonne étanchéité. Mais des armatures réalisées dans le joint en caoutchouc mou sont alors nécessaires pour assurer l'étanchéité.

Pour résoudre le problème de l'incompatibilité entre la dureté nécessaire du caoutchouc, liée à l'étanchéité, et la mollesse nécessaire d'un joint caoutchouc pour permettre l'insertion d'une pièce coudée, l'invention propose de réaliser une encoche dans le joint. Ainsi, lors du passage d'une pièce coudée, l'encoche se déforme. Cette encoche induit localement un abaissement de la dureté macroscopique. Ainsi, l'orifice de passage se déforme de telle sorte qu'il permet le passage d'une pièce à section variable. L'étanchéité est, quant à elle, maintenue par la dureté du caoutchouc choisi, à l'endroit où elle s'exerce entre le joint et la pièce introduite. De préférence, l'étanchéité est renforcée grâce à la présence de reliefs en forme de branches de sapin ménagés sur la pièce coudée à l'endroit de celle-ci qui est au contact du joint. On montrera que, grâce à un phénomène d'aspiration, l'étanchéité est encore mieux assurée si des sommets de troncs de cône formés par ces reliefs sont orientés vers une chambre à pression moins forte.

L'invention concerne donc un servofrein pneumatique comportant une chambre avant connectable à une pompe à vide, une chambre arrière connectable à une arrivée haute pression, une cloison mobile étanche entre les deux chambres, un équipage mobile emporté avec la cloison mobile et relié à un circuit hydraulique de freinage, un dispositif pour admettre un fluide haute pression dans la chambre arrière au moment d'un freinage, un joint de passage au travers de la cloison étanche, et un conduit coudé creux passant dans le joint étanche, caractérisé en ce que le joint comporte une encoche pouvant admettre une déformation pour permettre le passage d'un coude du conduit creux coudé.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figures 1 : une représentation d'un servofrein conforme à l'invention ;
- Figure 2 : des détails d'un joint d'étanchéité avec une encoche ;
- Figures 3 à 5 : des étapes d'un procédé de montage d'une pièce coudée dans le joint ;
- Figures 6 à 7 : des représentations schématiques d'une membrane d'un servofrein munie de deux types d'encoche,

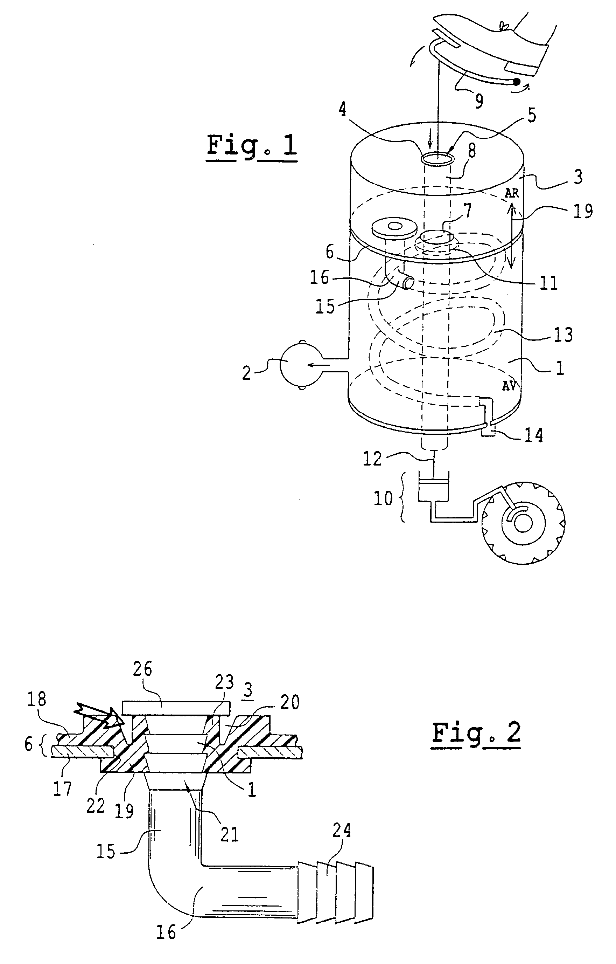

La Figure 1 montre un servofrein pneumatique conforme à l'invention comportant une chambre avant 1 connectable à une pompe à vide 2. Typiquement la pompe 2 peut être constituée par une prise des gaz d'admission d'un moteur à essence d'un véhicule. Pour un véhicule avec un moteur diesel, on utiliserait une pompe à vide externe. Le servofrein comporte également une chambre arrière 3 connectable, par exemple par une valve schématique 4, à une arrivée 5 haute pression : typiquement l'air ambiant. Le servofrein comporte par ailleurs une cloison mobile 6 munie habituellement d'une jupe rigide et d'une membrane étanche. La membrane empêche la communication pneumatique entre les deux chambres. La cloison 6 est percée d'un orifice étanche 7 pour laisser passer un équipage mobile 8. L'équipage 8 est relié mécaniquement d'une part à une pédale de frein 9 et d'autre part à un circuit 10 hydraulique de freinage. Le principe de l'assistance procuré par un tel servofrein est le suivant. Sous l'action de la pédale 9, l'équipage mobile 8 plonge dans la chambre arrière dégageant la valve 4 par laquelle l'air ambiant s'introduit dans la chambre arrière 3. L'air ambiant exerce alors une pression sur la cloison 6 qui entraîne, par l'intermédiaire d'un appui 11 solidaire de l'équipage mobile 8, l'équipage mobile 8 de manière à ce qu'une extrémité 12 de ce dernier actionne le circuit hydraulique de freinage 10.

Le servofrein comporte en outre un conduit souple hélicoïdal 13. Le conduit souple hélicoïdal 13, dans un exemple préféré, permet de relier d'une manière étanche la chambre arrière 3 à un détecteur de pression 14 monté à l'avant de la chambre avant. Le conduit souple hélicoïdal 13 débouche dans la chambre arrière 3, au travers de la cloison 6, par l'intermédiaire d'une pipe 15. La pipe 15 est une pièce à section variable, surtout à l'endroit d'un coude 16. A cet endroit elle forme un conduit creux coudé. Le joint de l'invention sert essentiellement à assurer l'étanchéité du montage de cette pipe 15 sur la cloison 6.

La figure 2 montre en coupe que, dans un exemple préféré, la cloison 6 comporte deux parties. Une première partie est une jupe 17. Une deuxième partie est une membrane 18. La jupe 17 sert d'organe de transmission d'effort à l'équipage mobile 8 par appui sur l'appui 11. La membrane 18 permet d'isoler les deux chambres 1 et 3 l'une de l'autre, et, par sa surface déployée soumise à une surpression, de pousser la jupe 17. En effet, au moment du freinage, les chambres avant 1 et arrière 3 ne sont pas à la même pression. Ainsi la chambre avant 1 est à une pression faible imposée par la pompe à vide. La chambre arrière 3 est quant à elle mise sous pression plus élevée, sous pression atmosphérique notamment.

Un joint d'étanchéité 19, selon l'invention, permet de lier de manière étanche l'extérieur de la pipe 15 à la membrane 18. Le joint 19 est de préférence incorporé à la membrane 18. Ils sont alors solidaires. La membrane 18 et le joint 19 d'étanchéité sont en caoutchouc, notamment en caoutchouc dur, de dureté shore de l'ordre de 50 shore A. Selon l'invention, le joint 19 comporte une encoche 20. Ici, l'encoche 20 a un profil triangulaire, et s'étend par révolution tout autour d'un orifice 21 au travers duquel passe la pipe 15. Le profil de l'encoche peut être également rectangulaire, voire arrondi. Le joint 19, s'il n'est pas solidaire de la membrane 18, est de toute façon lié de manière étanche à celle-ci. Le joint 19 repose sur les bords d'un orifice 22 réalisé dans la jupe 17, l'orifice 21 étant situé dans l'orifice 22. Le joint 19 réapparaît de l'autre coté de la cloison 19 en enrobant les bords de l'orifice 22. L'encoche 20 sert à autoriser une déformation du joint 19 pour permettre une insertion facile du coude 16 de la pipe 15 alors que le joint 19 est en caoutchouc dur.

L'encoche 20 définit une lèvre 23. Lorsque l'encoche 20 est périphérique circulaire, la lèvre est également périphérique circulaire. L'encoche 20 et la lèvre 23 sont placées du côté du joint où règne la plus forte pression. Ainsi dans l'exemple de réalisation présenté dans la présente description, l'encoche 20 est orientée du côté de la chambre arrière 3. On expliquera par la suite la justification de cette solution. Il serait toutefois également envisageable de placer l'encoche et la lèvre dans le joint 19 du coté de la chambre avant 1, ou bien de réaliser des encoches de chaque coté de la cloison 6. L'encoche peut être plus ou moins large. Si elle est très large, la hauteur du joint est réalisée en pratique par la présence de la lèvre. Dans ce cas toutefois, l'étanchéité est moins bonne car le caractère massif du joint, dont la composition pleine (ou presque) assure l'appui de l'intérieur de la lèvre contre l'extérieur de la pipe, est moins prononcé. De préférence, le volume de l'encoche est légèrement inférieur à l'augmentation de volume occasionné lors du passage du coude dans le joint.

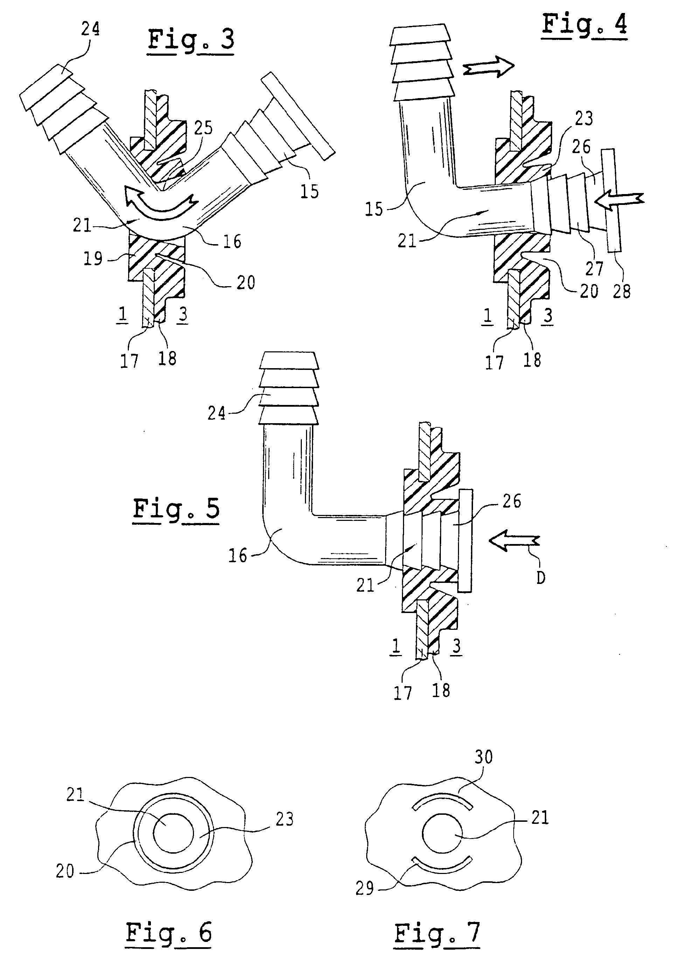

Lors du montage de la pipe 15, figures 3 à 5, différentes étapes sont effectuées. La figure 3 montre une première étape du montage. Ainsi au départ, on insère un embout 24 de la pipe coudée 15 dans l'orifice 21. Cette insertion est droite jusqu'à ce qu'il y ait contact entre le coude 16 et le joint 19. La raison de l'augmentation de la surface de la section de la pipe 15, à l'endroit du coude 16, est liée au fait que la pipe 15 est réalisée par un moulage simple. Comme elle est creuse, deux tiges (droites) sont placées dans le moule pour réserver le volume intérieur du tube 15. Leur retrait rectiligne au démoulage est facile. Ce mode de fabrication convient bien à des fabrications en grande quantité, à faible coût. Il en résulte cependant la présence du coude angulaire 16. La réalisation d'un coude arrondi ne nécessiterait pas un changement de la section de passage dans le joint 19. Mais il conduirait à un coût de pipe 15 plus élevé. La manipulation d'une telle pipe à coude arrondi serait par ailleurs moins aisée au montage.

La figure 3 montre également une deuxième étape du montage de la pipe 15 coudée. Lorsqu'un contact est établi entre le coude 16 et le joint 19, on réalise une rotation de la pipe 15. La rotation a pour centre un point de contact 25 entre l'intérieur du coude 16 et le joint 19. On enfonce la pipe 15 en même temps qu'on effectue sa rotation dans l'orifice 21. La rotation est permise grâce à l'existence de l'encoche 20. En effet ces encoches permettent à la lèvre 23 de se déformer. La déformation de la lèvre 23 modifie la forme de l'orifice 21 de passage. La déformation est dans ce cas approximativement une ellipse. Cette ellipse a pour grand axe l'intersection du plan de la membrane avec le plan de la pipe coudée. Cette déformation de l'orifice 21 de passage permet l'enfoncement de la pipe 15. La présence de l'encoche 20, ou des encoches de part et d'autre de la cloison 6, a pour effet de limiter le plan de basculement en rotation de la pipe 15 à une faible hauteur dans le joint 19. Cette faible hauteur est le siège d'une forte compression du matériau du joint 19 pour laisser passer le coude 16. Mais cette forte compression est limitée en hauteur, et par conséquent permet le passage du coude sans risque de destruction de la pipe 15 et ou du joint 19.

La figure 4 montre une troisième étape du montage. Une fois que le coude 16 de la pipe 15 est passé, il reste à mettre en place définitivement cette pipe. Dans ce but celle ci possède près d'un culot 26, d'une part des reliefs 27 en forme de branches de sapin (dits sapins dans le langage courant) et d'autre part une collerette 28 qui couronne la pipe 15 par un débordement. La troisième étape a pour but de permettre aux sapins 27 du culot 26 de s'enfoncer par translation dans l'orifice 21. L'enfoncement de la pipe 15 est là encore facilité par la déformation de l'encoche 20.

La figure 5 montre une dernière étape de l'enfoncement de la pipe 15 au travers de l'orifice 21 de passage. L'enfoncement, qui est une translation selon l'axe de révolution de l'orifice 21, a lieu tant que la collerette 28 du culot 26 n'est pas en contact avec le joint 19. Une fois le contact établi, la présence des sapins au niveau du culot 26 permet d'assurer l'étanchéité du système joint 19 et pipe 15. Dans le cas présent, les sapins forment des troncs de cônes dont le sommet est orienté vers la chambre avant 1. Cette disposition a deux effets simultanés. Premièrement l'enfoncement de la pipe 15 n'est pas contrarié par les arrêtes d'extrémité des sapins (au contraire ces reliefs glissent dans le bon sens), et deuxièmement, la forme des sapins dans ce sens est favorable au maintien de l'étanchéité, compte tenu de ce que la chambre 3 est à plus haute pression que la chambre 1. De ce dernier point de vue, si les sapins avaient été orientés dans l'autre sens, l'étanchéité moins bonne aurait pu ne pas être suffisante. On remarquera que cette question de l'orientation des sapins est d'importance puisqu'elle induit le problème que l'invention a du résoudre. Autrement, on aurait tout simplement pu imaginer de passer le culot de la pipe 15 (sans collerette 26) dans le joint 19. Dans la réalisation préférée, l'embout 24 comporte quatre sapins et le culot 26 comporte trois sapins.

La figure 5 montre un encastrement des sapins dans le joint 19. Les sapins sont plaqués sur le joint grâce à une force de pression P se traduisant par l'existence d'un phénomène d'aspiration. Le sommet du sapin est du côté des basses pressions. Si les sapins avaient été réalisés dans l'autre sens, le plaquage des sapins aurait été possible mais la force de pression aurait eu tendance à repousser la pièce coudée.

La pipe 15 est enfoncée dans l'orifice 21 à partir de la chambre ayant une pression la plus importante vers la chambre ayant une pression moins importante. La pression joue un rôle aussi important que la dureté du matériau du joint 19 lui-même. L'étanchéité est liée à la dureté du caoutchouc. Si le matériau caoutchouc n'est pas suffisamment dur, la pipe 15 peut passer plus facilement mais l'ensemble n'est pas suffisamment étanche. Une fois que la collerette 26 est en contact avec le joint 19, il pourrait être envisageable de remplir l'encoche 20, par exemple par une rondelle en caoutchouc.

La figure 6 montre en vue de dessus une première réalisation pour l'encoche 20. Ainsi l'encoche 20 peut être périphérique à l'orifice 21, notamment circulaire. La figure 7 montre une deuxième réalisation possible pour l'encoche 20. Dans cette deuxième réalisation, l'encoche peut être formée de deux cavité 29 et 30 disjointes, de forme étendue. Une des cavités ou les deux cavités peuvent être en arc de cercle, ou représenter chacune un segment rectiligne. Globalement, si une telle solution est retenue, les cavités 29 et 30 seront perpendiculaires au grand axe de l'ellipse destinée à être formée dans le joint 19 au moment où le coude 16 y passe. Dans cette variante, la lèvre 23 n'est pas périphérique mais limitée par les extrémités des cavités.

## Revendications

1. - Servofrein pneumatique comportant une chambre avant (1) connectable à une pompe à vide (2), une chambre arrière (3) connectable à une arrivée haute pression, une cloison mobile (6) étanche entre les deux chambres, un équipage mobile (8) emporté avec la cloison mobile et relié à un circuit hydraulique (10) de freinage, un dispositif (4) pour admettre un fluide haute pression dans la chambre arrière au moment d'un freinage, un joint (19) de passage au travers de la cloison étanche, et un conduit (13) coudé creux passant dans le joint étanche, **caractérisé en ce que** le joint comporte une encoche (20) pouvant admettre une déformation pour permettre le passage d'un coude du conduit creux coudé.

2. - Servofrein selon la revendication 1, **caractérisé en ce que** la cloison comporte une jupe (17) et une membrane (18), le joint étant solidaire de la membrane.

3. - Servofrein selon l'une des revendications 1 à 2, **caractérisé en ce que** l'encoche forme une lèvre (23), en particulier une lèvre circulaire périphérique.

4. - Servofrein selon l'une des revendications 1 à 3, **caractérisé en ce que** l'encoche est située du côté de la chambre arrière.

5. - Servofrein selon l'une des revendications 1 à 4, **caractérisé en ce que** le conduit coudé est coudé de manière angulaire.

6. - Servofrein selon l'une des revendications 1 à 5, **caractérisé en ce que** le conduit coudée comporte des reliefs (27) à l'endroit de son maintien dans le joint.

7. - Servofrein selon la revendication 6, **caractérisé en ce que** les reliefs sont en forme de sapin.

8. - Servofrein selon la revendication 7, **caractérisé en ce que** les reliefs en forme de sapin forment des troncs de cônes orienté par leur sommet vers la chambre avant.

9. - Servofrein selon l'une des revendications 1 à 8, **caractérisé en ce qu'**une déformation de l'orifice de passage est une ellipse qui a pour plus grand côté la plus grande longueur définie par une section du coude du conduit coudé.

10. - Servofrein selon l'une des revendications 1 à 9, **caractérisé en ce que** le joint présente deux encoches (29, 30) disjointes, de préférence en arc de cercle.

## Claims

1. Pneumatic servobrake, comprising a front chamber (1), capable of being connected to a vacuum source (2), a rear chamber (3), which can be connected to a high-pressure supply inlet, a moving tight partition wall (6) between said chambers, a moving set (8) carried along by the partition wall and connected to a hydraulic braking circuit (10), a device (4) provided for the supply of the rear chamber with a high-pressure fluid at the time of a braking operation, a seal (19) for a passage through the tight partition wall, and a hollow bent tube (13) passing through the seal, **characterised in that** the seal comprises a slot (20), which can be distorted to some extent for the passage of a bend of the hollow bent tube.

2. Servobrake according to claim 1, **characterised in that** the partition wall comprises a skirt (17) and a diaphragm (18), said seal being integral with the diaphragm.

3. Servobrake according to claim 1 or 2, **characterised in that** the slot forms a lip (23), more particularly a circular peripheral one.

4. Servobrake according to any one of claims 1 to 3, **characterised in that** the slot is situated on the side of the rear chamber.

5. Servobrake according to any one of claims 1 to 4, **characterised in that** said bent tube has an angular bend.

6. Servobrake according to any one of claims 1 to 5, **characterised in that** the bent tube comprises protrusions (27), at the spot where it is retained within the seal.

7. Servobrake according to claim 6, **characterised in that** the protrusions are in the shape of fir branches.

8. Servobrake according to claim 7, **characterised in that** the fir-branch shaped protrusions form truncated cones, the tops of which are directed towards the front chamber.

9. Servobrake according to any one of claims 1 to 8, **characterised in that** a distortion of the through-opening is an ellipse, the major axis of which is the greatest length defined by a cross section of the bend of the bent tube.

10. Servobrake according to any one of claims 1 to 9, **characterised in that** the seal comprises two separate slots (29, 30), preferably in the shape of an arc of a circle.

## Patentansprüche

1. Pneumatische Servobremse mit einer vorderen Kammer (1), die mit einer Vakuumpumpe (2) verbunden werden kann, einer hinteren Kammer (3), die mit einer Hochdruckzuführung verbunden werden kann, einer beweglichen, dichten Trennwand (6) zwischen den beiden Kammern, einem beweglichen Organ (8), das mit der beweglichen Trennwand mitgenommen wird und mit einem hydraulischen Bremskreis (10) verbunden ist, einer Vorrichtung (4) für den Einlass eines Hochdruckfluids in die hintere Kammer bei einer Bremsung, einer Dichtung (19) am Durchgang durch die dichte Trennwand und einer gebogenen Hohlleitung (13), die durch die Dichtung verläuft, **dadurch gekennzeichnet, dass** die Dichtung eine Einkerbung (20) aufweist, die eine Verformung gestatten kann, um das Durchführen einer Biegung der gebogenen Hohlleitung zu ermöglichen.

2. Servobremse nach Anspruch 1, **dadurch gekennzeichnet, dass** die Trennwand eine Schürze (17) und eine Membran (18) aufweist, wobei die Dichtung mit der Membran fest verbunden ist.

3. Servobremse nach Anspruch 1 oder 2, **dadurch gekennzeichnet, dass** die Einkerbung eine Lippe (23), insbesondere eine kreisförmige Umfangslippe bildet.

4. Servobremse nach einem der Ansprüche 1 bis 3, **dadurch gekennzeichnet, dass** die Einkerbung auf der Seite der hinteren Kammer liegt.

5. Servobremse nach einem der Ansprüche 1 bis 4, **dadurch gekennzeichnet, dass** die gebogene Leitung winkelmäßig gebogen ist.

6. Servobremse nach einem der Ansprüche 1 bis 5, **dadurch gekennzeichnet, dass** die gebogene Leitung an der Stelle, an der sie in der Dichtung gehalten ist, erhöhte Abschnitte (27) aufweist.

7. Servobremse nach Anspruch 6, **dadurch gekennzeichnet, dass** die erhöhten Abschnitte tannenförmig sind.

8. Servobremse nach Anspruch 7, **dadurch gekennzeichnet, dass** die tannenförmigen erhöhten Abschnitte Kegelstümpfe bilden, die über ihren Scheitel zur vorderen Kammer gerichtet sind.

9. Servobremse nach einem der Ansprüche 1 bis 8, **dadurch gekennzeichnet, dass** eine Verformung der Durchgangsöffnung eine Ellipse ist, deren Längsseite die längste Länge ist, die von einem Schnitt der Biegung der gebogenen Leitung definiert ist.

10. Servobremse nach einem der Ansprüche 1 bis 9, **dadurch gekennzeichnet, dass** die Dichtung zwei getrennte, vorzugsweise kreisbogenförmige Einkerbungen (29, 30) aufweist.
